(19) **Europäisches Patentamt**
**European Patent Office**
**Office européen des brevets**

(11) **EP 3 035 209 A1**

(12) **EUROPEAN PATENT APPLICATION**

(43) Date of publication:
**22.06.2016 Bulletin 2016/25**

(51) Int Cl.:
***G06F 17/30*** (2006.01)

(21) Application number: **14307077.9**

(22) Date of filing: **18.12.2014**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (71) Applicant: **Thomson Licensing**<br>**92130 Issy-les-Moulineaux (FR)**<br><br>(72) Inventor: **Theis, Oliver**<br>**32689 Kalletal (DE)** |

(54) **Method and apparatus for deriving a perceptual hash value from an image**

(57)    A method and apparatus for deriving a hash value from an image, comprising: resizing (S21) the image into a series of first resized images having decreasing horizontal size and increasing vertical size, deriving (S22) from each first resized image a horizontal difference image comprising horizontal neighboring pixel differences, resizing (S31) the image into a sequence of second resized images having increasing horizontal size and decreasing vertical size, deriving (S32) from each second resized image a vertical difference image comprising vertical neighboring pixel differences, and combining (S4) the sign bits of the horizontal neighboring pixel differences and the sign bits of the vertical neighboring pixel differences in a predefined order into bits of the hash value (S5).

Fig. 1

**Description**

The invention relates to a method and an apparatus for deriving, from an image of arbitrary size, a fixed bit length hash value that allows similarity comparisons.

Cryptographic hashes like MD5 are applied to check two data words for equality on a bit-level. However, the MD5 algorithm is not suited for identifying as identical image or video content that has undergone certain modifications not really changing the way the content is perceived. This relates for example to coding errors up to a certain level, change of resolution up to a certain level, noise removal, sharpening, color correction up to a certain level, white balancing, cropping up to a certain level, etc.

There are various technical solutions and approaches to this problem, which are known in literature. However, only a few have found their way to commercial use. In the following the term "perceptual hashing" will be used to refer to this type of technologies.

Examples for uses of perceptual hashing are image search engines like TinyEye (http://www.tineye.com) or Google image search. Furthermore, content based video search is applied to identify piracy and copyright violations. Most prominently Google uses "ContentID" to find unauthorized content on their youTube platform. For the same purpose, Technicolor offers a solution called RASH, as described in http://medialibrary.technicolor.com/CommunsImagesEnLigne /Download/3086825_333_1_277_0-09699108A54FB702019 3DA9A81A07149/DS_Technicolor_Fingerpr inting.pdf.

US 8,463,000 B1 discloses a system having a user interface that receives input specifying parameters in a fingerprint search of data. The fingerprints and addresses of content are presented. A heuristic identification system for identifying content, for example an image, graphic data, photo, music, video and/or audio content, in the world wide web is provided. The copies of files, which are slightly different from each other due to artefacts located within the image video or audio content, can be accurately located and identified.

Aside from usages driven by the intent to protect copyrights, there are two additional technical areas in the video and film production workflow, which are of special interest.

The first is content linking. In this usage, image content is linked to metadata. For fingerprinting image content perceptual hashing is one viable technical option.

The second field of interest is to identify different copies in various formats of the same content that have been generated during the postproduction workflow. This task differs from anti-piracy use in several ways. In particular, in post-production, the content is modified, for example color graded. In contrast to this, pirate copies of video data usually refer to the final public version. Furthermore, different takes of similar content exist. These must be distinguished. In the final version of for example a movie, there is only a single public version. In some cases, there is more than one public version, wherein the different versions differ with respect to cuts.

For post-production usage, the content should be identified frame accurately. This is not required for anti-piracy usage. Finally, image data used in post-production do typically not include audio information. Hence, audio cannot be utilized.

US 8,229,227 B2 discloses a content based video sequence identifying method. This involves extracting video features of selected video frames and generating multidimensional content based signatures based on extracted video features that identify a certain video sequence. Compact representative signatures are generated on the video sequence structural level as well as on the selected video frame level resulting in an efficient video database formation and search.

Both usages, content linking and identification of different copies in post-production, are highly connected and one fingerprint table can serve both.

It is an object of the invention to provide a method and apparatus for deriving, from an image, a hash value, wherein the hash value should be tolerant against typical post-production image manipulations and at the same time sensitive enough to discriminate consecutive images in a video.

The object is solved by a method of deriving, from an image of arbitrary size, a fixed bit length hash value (h) that allows similarity comparisons, the method comprising:

-    resizing the image into a series comprising a number n of first resized images having decreasing horizontal size and increasing vertical size and
-    deriving from each first resized image a horizontal difference image comprising horizontal neighboring pixel differences,
    wherein the horizontal size and the vertical size of the first resized images are chosen such that the total number of horizontal neighboring pixel differences is constant for all horizontal difference images,
-    resizing the image into a series comprising the same number n of second resized images having increasing horizontal size and decreasing vertical size and
-    deriving from each second resized image a vertical difference image comprising vertical neighboring pixel differences,

wherein the horizontal size and the vertical size of the second resized images are chosen such that the total number of vertical neighboring pixel differences is constant for all vertical difference images, wherein the method further comprises the step of:

    combining the sign bits of the horizontal neighboring pixel differences of all horizontal difference images and the sign bits of the vertical neighboring pixel differences of all vertical difference images, in a predefined arbitrary order, into the hash value.

In this, the number n of first respectively second resized images is a system parameter.

Alternatively, the horizontal size and the vertical size of the first resized images are chosen such that the total number of pixels in the first resized images is constant, and the horizontal size and the vertical size of the second resized images are chosen such that the total number of pixels in the second resized images is constant. As will be illustrated in more detail below, this allows for a simplification of the resizing steps. It also enables, if so desired and with specific settings, to use a same single set of resized images for deriving the horizontal difference images as well as the vertical difference images.

Advantageously, the method allows for fingerprinting of image content for linking the image content with metadata. In addition to this, the method enables a user to find identical or similar versions of a given content in the postproduction workflow. In particular, the user can reconstruct edit decision lists also known under the abbreviation EDL. This is performed taking into account that content representation, for example Bayer Raw, Lin/Log, Color, etc., and content format, for example RAW, ProRes, H264, etc., may vary during the different stages of postproduction.

A general advantage of hash based content identification is that comparing hash values is faster than comparing images themselves, thereby allowing to search through large databases in reasonable time. The special advantage of the hash generation scheme according to aspects of the invention is that it combines robustness and accuracy, which is usually a tradeoff: A hash value, which is tolerant against a wide range of variations will likely fail to discriminate between neighboring images of an image sequence. On the other hand, a hash which is sensitive to content changes from image to image, will only tolerate minor variations.

The invention is based on the following considerations: The general workflow is to generate and store a unique hash having a fixed bit length for every frame of each content file of a postproduction project. The values are aggregated in a hash database or a hash table.

A search query is handled by generating hashes for each frame of the content under investigation and by comparing them to the hash database. For example, a Hamming metric may be used to identify frames that are identical or similar within certain thresholds, by comparing their hash values in a bit-by-bit way.

It is an important aspect of the invention that a unique hash value is generated, which allows solving the above referenced technical problems. These are taking into account that content representation can be very different, for example Bayer Raw, Lin/Log, Color, etc. and also formats vary, for example RAW, ProRes, H264, etc. during the different stages of postproduction.

This requires generating a hash value that is on one side resilient against typical post-production modification of the image data and on the other side sensitive enough to discriminate neighboring images in an image sequence. For this, a color frame or multichannel frame is converted to its luma representation if necessary, and binary hash components of a certain length are generated for a certain number of pyramid scale representations. After that, the hash components are concatenated or combined to a single hash value that represents the entire image.

In an advantageous embodiment of the invention, the method is further enhanced in that the hash value comprises a number of n hash elements, each of which has a horizontal component and a vertical component.

The horizontal component and the vertical component are concatenated or combined so as to form an element of the hash value. The hash value comprises a number of n horizontal and n vertical hash components, one each for every element of the hash.

In another embodiment, the horizontal component of a j-th hash element is a vector comprising the sign bits of the horizontal neighboring pixel differences derived from the j-th first resized image. Correspondingly, the vertical component of the j-th hash element is a vector comprising the sign bits of the vertical neighboring pixel differences derived from the j-th second resized image.

Furthermore, in an advantageous aspect of the invention, each of the horizontal component and the vertical component has a bit length of m, where for a given number of levels n, m is chosen as $4^{**}(n-1)$, with '**' representing the exponentiation operation.

Advantageously, the method according to aspects of the invention is enhanced in that the series of first resized images is generated by resizing - also called scaling or resampling - the image to a size of $(m / (2^{**}(j-1))+1) \times 2^{**}(j-1)$ pixels and the series of second resized images is generated by resizing the image to a size of $2^{**}(j-1) \times (m / (2^{**}(j-1))+1)$ pixels, wherein resizing is performed for integer levels j between 1 and n.

In other words, the image is scaled to a series of first resized images having decreasing horizontal size and increasing vertical size. The image is also scaled into a series of second resized images having increasing horizontal size and decreasing vertical size. The horizontal size and the vertical size of the resized images are chosen such that the total number of horizontal respectively vertical neighboring pixel differences is constant for all levels.

In other words, for all values of j, which is between 1 and n, the number of horizontal or vertical neighboring pixel differences is constant.

According to still another advantageous embodiment of the invention, the j-th horizontal difference image has a size of $m/(2^{**}(j-1)) \times 2^{**}(j-1)$ pixels and the j-th vertical difference image has a size of $2^{**}(j-1) \times m/(2^{**}(j-1))$ pixels.

Depending on whether the difference image is calculated in horizontal or in vertical direction, the difference image is always one pixel smaller than the corresponding resized image.

In yet another advantageous aspect of the invention, the resizing of the image into the first resized images and/or the second resized images is performed using an interpolation kernel, performing a bilinear, bicubic and/or Lanczos interpolation. Oother commonly known interpolation kernels can also be applied.

Combination of the hash elements into the hash value, in particular the combination of the horizontal component and the vertical component to form the j-th hash element, must be done in a predefined, but otherwise arbitrary order. In particular, the same order should be used for all images, whose hash value is collected into the hash database. If this is done, hash values of two different images can be compared by a simple bit-by-bit comparison.

The object is further solved by an apparatus of converting an image of arbitrary size into a fixed bit length hash value that allows similarity comparisons, wherein the apparatus comprises:

> an input unit, configured to receive a stream of image data comprising the image of arbitrary size,
> a converting unit configured to convert the image if necessary,
> a processing unit configured to,

> - resize the image into a series comprising a number n of first resized images having decreasing horizontal size and increasing vertical size and
> - derive from each first resized image a horizontal difference image comprising horizontal neighboring pixel differences,

> wherein the horizontal size and the vertical size of the first resized images are chosen such that the total number of horizontal neighboring pixel differences is constant for all horizontal difference images,

> - resize the image into a series comprising the same number n of second resized images having increasing horizontal size and decreasing vertical size and
> - derive from each second resized image a vertical difference image comprising vertical neighboring pixel differences,

> wherein the horizontal size and the vertical size of the second resized image are chosen such that the total number of vertical neighboring pixel differences is constant for all vertical difference images, wherein the apparatus further comprises:

> > a combining unit configured to combine the sign bits of the horizontal neighboring pixel differences of all horizontal difference images and the sign bits of the vertical neighboring pixel differences of all vertical

difference images, in a predefined arbitrary order, into the hash value.

The same or similar advantages and advantageous aspects, which have been explained with respect to the method according to aspects of the invention, apply to the apparatus according to aspects of the invention in the same or similar way.

In an advantageous embodiment of the invention, the combining unit is configured to generate a hash value comprising a number of n hash elements, wherein each hash element comprises a horizontal component and a vertical component. In particular, the combining unit is further configured to generate a hash value, wherein the horizontal component of a j-th hash element is a vector comprising the sign bits of the horizontal neighboring pixel differences derived from the j-th first resized image, and the vertical component of the j-th hash element is a vector comprising the sign bits of the vertical neighboring pixel differences derived from the j-th second resized image. Furthermore, in particular, the combining unit is configured to generate a hash value, wherein each of the horizontal component and the vertical component has a bit length of m that equals $4^{**}(n-1)$.

According to an advantageous aspect of the invention, the processing unit is configured to generate the series of first resized images by resizing the image to a size of $(m/(2^{**}(j-1))+1) \times 2^{**}(j-1)$ pixels and to generate the sequence of second resized images by resizing the image to a size of $2^{**}(j-1) \times (m/(2^{**}(j-1))+1)$ pixels, wherein resizing is performed for integer levels j between 1 and n. Furthermore, in particular, the processing unit is configured to generate the j-th horizontal difference image having a size of $m/2^{**}(j-1) \times 2^{**}(j-1)$ pixels and the j-th vertical difference image having a size of $2^{**}(j-1) \times m/(2^{**}(j-1))$ pixels.

The processing unit is configured to combine the hash elements to form the hash value in a predetermined but otherwise arbitrary order.

Further characteristics of the invention will become apparent from the description of the embodiments according to the invention together with the claims and the drawings. Embodiments according to the invention can fulfill individual characteristics or a combination of several characteristics.

The invention is described below in more detail based on exemplary embodiments, without restricting the general intent of the invention. Reference is made expressly to the drawings with regard to the disclosure of all details according to the invention that are not explained in greater detail in the description. The drawings show in:

**FIG. 1** a simplified flow chart illustrating a method for deriving a hash value from an image and

FIG. 2    a simplified block diagram of an apparatus for deriving from an image a hash value.

In the drawings, the same or similar types of elements or respectively corresponding parts are provided with the same reference numbers in order to prevent the item from needing to be reintroduced.

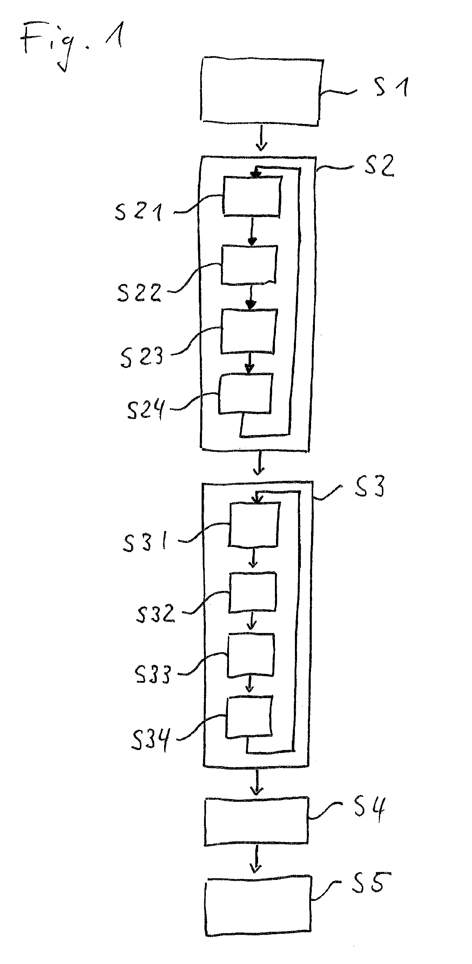

In the following a method for generating a perceptual hash value, according to aspects of the invention will be described by making reference to the simplified flowchart in **FIG. 1.**

A hash value for an image B of a stream S of image data is generated. For example, the stream S of image data is a stream of video data, wherein the image B is a single image in this video data.

At step **S1** of the method, the image may optionally be converted. Such conversion may for example be:

- deriving a single channel representation from a multichannel image, in particular deriving a luminance-only representation from a color image,
- selecting one channel out of the channels of a multichannel image, in particular selecting one channel from among the channels of an RGB image,
- deriving a grey scale image from the image. Of course, if the image B already is luminance-only or single-channel, a conversion may not be necessary and the image can be directly used. With respect to processing multichannel images, it may also be envisaged that the method according to this disclosure is being used on each image channel independently, and the derived hash values are concatenated to a single multichannel hash value.

At step **S2**, the horizontal hash components hjH are computed, which comprises steps S21 to S24 being performed for j = 1 to j = n:

A hash value h is generated through the combination of n binary hash elements hj:

$$h = [h1 \ \dots \ hj \ \dots \ hn].$$

Each hash element hj in turn is a combination of two binary hash components:

$$hj = [hjH \ hjV],$$

wherein hjH is a horizontal hash component and hjV is a vertical hash component. Each of the hash components hjH and hjV has a bit length of m which can be chosen as 4**(n-1).

Because the hash comprises n hash elements, and each hash element comprises a horizontal and a vertical hash component, the total length or size of the hash is 2*n*(2**(n-1)).

In step **S21**, the image Y is scaled to a size of (m/(2**(j-1))+1) $\times$ 2**(j-1) pixels. This reduced/scaled image shall be referred to as YH1, YH2 ... YHn, depending on whether the scaled image is computed for j = 1, 2 or n.

Subsequently, in step S22, a horizontal difference image dH comprising differences between horizontally neighboring pixel values of the scaled image is computed. The horizontal difference image dH has a size of: m/(2**(j-1)) $\times$ 2**(j-1) pixels.

In the third step S23, the sign bits of the values of the horizontal difference image dH are combined, and in step S24 the combined sign bits are assigned to hjH.

In other words, the computed series of first resized images has a decreasing horizontal size and an increasing vertical size. Furthermore, the horizontal size and the vertical size of the first resized images are chosen such that the total number of horizontal neighboring pixel differences is constant for all horizontal difference images, for all levels j between 1 and n.

The method will be illustrated in the following for the example of n = 4. Chosing M=4**(n-1) results in m=4**3=64.

In the first level j = 1, the image Y is scaled to a first resized image of 65 x 1 pixels, i.e. a single row of 65 pixels. The horizontal difference image dH derived therefrom thus comprises 64 x 1 values. The sign bits of the values in this horizontal difference image constitute the horizontal component h1H of hash element h1.

In the second level j = 2, the image Y is scaled to a first resized image of 33 x 2 pixels, i.e. two rows of 33 pixels each. The horizontal difference image dH derived therefrom thus comprises 32 x 2 values. The sign bits of the values in this horizontal difference image constitute the horizontal component h2H of hash element h2.

In the third level j = 3, the image Y is scaled to a first resized image of 17 x 4 pixels, i.e. four rows of 17 pixels each. The horizontal difference image dH derived therefrom thus comprises 16 x 4 values. The sign bits of the values in this horizontal difference image constitute the horizontal component h3H of hash element h3.

In the fourth level j = 4, the image Y is scaled to a first resized image of 9 x 8 pixels, i.e. eight rows of 9 pixels each. The horizontal difference image dH derived therefrom thus comprises 8 x 8 values. The sign bits of the values in this horizontal difference image constitute the horizontal component h4H of hash element h4.

For the chosen example, each of the hash components h1H to h4H is of 64 bits length.

In step S3, the vertical part hjV is computed for j = 1 to j = n. steps S31 to S34 are performed for j being between 1 and n.

In step S31, the image Y is scaled to a size of $2^{**}(j-1) \times (m/(2^{**}(j-1))+1)$ pixels. This reduced/scaled image shall be referred to as YV1, YV2 ... YVn, depending on whether the scaled image is computed for j = 1, 2 or n.

In the second step S32, the vertical difference image dV of the scaled image is computed. The vertical difference image has a size of $2^{**}(j-1) \times m/(2^{**}(j-1))$ pixels. In contrast to step S22, the difference between the pixel values of neighboring pixels is computed in vertical direction, not in horizontal direction.

In step S33, the sign bits of the values in the vertical difference image dV are combined.

In step S34, the combined sign bits are assigned to the vertical hash component hjV of the j-th hash element.

In the following, this will be illustrated for the above used example of n=4 and m=64.

In the first level j = 1, the image Y is scaled to a second resized image of 1 x 65 pixels, i.e. 65 rows of one pixel each. The vertical difference image dV derived therefrom thus comprises 1 x 64 values. The sign bits of the values in this vertical difference image constitute the vertical component h1V of hash element h1.

In the second level j = 2, the image Y is scaled to a second resized image of 2 x 33 pixels, i.e. 33 rows of two pixels each. The vertical difference image dV derived therefrom thus comprises 2 x 32 values. The sign bits of the values in this vertical difference image constitute the vertical component h2V of hash element h2.

In the third level j = 3, the image Y is scaled to a second resized image of 4 x 17 pixels, i.e. 17 rows of four pixels each. The vertical difference image dV derived therefrom thus comprises 4 x 16 values. The sign bits of the values in this vertical difference image constitute the vertical component h3V of hash element h3.

In the fourth level j = 4, the image Y is scaled to a second resized image of 8 x 9 pixels, i.e. 9 rows of eight pixels each. The vertical difference image dV derived therefrom thus comprises 8 x 8 values. The sign bits of the values in this vertical difference image constitute the vertical component h4V of hash element h4.

Same as the horizontal components, the vertical hash components of this example each have a length of 64 bits.

In a subsequent step S4, for each value of j being between 1 and n, the horizontal component hjH and the vertical component hjV are concatenated to form the j-th hash element hj = [hjH hjV] of the hash value h. For the example of n=4, m=64, each hash element hj is of 128 bit length.

Finally, in step S5, the n elements hj (for j = 1 to j = n) of the hash value h are concatenated, thereby forming the hash value h = [h1 h2 ... hn]. In the example of n=4, m=64, the total length of the hash value h = [h1 h2 h3 h4] is 512 bit.

In the method outlined above, naturally, the steps S2 and S3 are interchangeable. Furthermore, in an advantageous embodiment of the invention, the image Y is reduced in size prior to performance of the steps S2 and S3. In particular, the image Y is reduced in size prior to the computation of the various scaled images in steps S21 and S31. This may improve processing time because the calculating the various resized images is costly in terms of computing time.

In an advantageous embodiment of the invention, the image Y is scaled down to an image Y' of size $(m+1) \times (m+1)$. This image Y' is used in the subsequent computation steps instead of Y.

The step of resizing the image Y (steps S21 and S31) can be performed using various interpolation kernels, for example bilinear, bicubic, Lanczos, etc.

It must be noted that the sign bits used in steps S24 and S34 can be derived differently, depending on the number format that is used for the difference values in the difference images. If the difference values are coded in a sign plus magnitude format, the sign bits can be directly used, without further processing. If the difference values are coded in two's complement or one's complement format, the sign bits must be derived, in a known way, from the bit patterns that code the differences.

The above aspects advantageously apply to all embodiments of the invention.

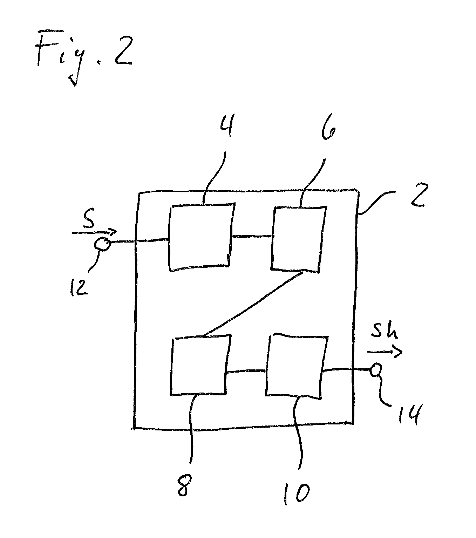

FIG. 2 shows a top level block diagram of an apparatus 2 for converting an image B of arbitrary size into a fixed bit length hash value h that allows similarity comparisons. The apparatus 2 is configured to receive a stream S of image data at an input terminal 12. The stream S of image data comprises at least one image B of arbitrary size. In particular, the stream S is a video data stream comprising a plurality of temporally consecutive images B having a predetermined size. This is in particular defined by the resolution and the sample bit depth of the video.

The stream S of image data is received by an input unit 4. This is coupled to a converting unit 6 configured to optionally convert the image. The image Y is for example a grey scale image. Furthermore, the apparatus 2 comprises a processing unit 8 and a combining unit 10. The input unit 4, the converting unit 6, the processing unit 8 and the combining unit 10 are coupled in that they are capable of interchanging data with each other. The combining unit 10 is configured to provide one hash value h for each image Y at an output terminal 14. Consecutive hash values for a stream of hash values Sh. The input terminal 12 and the output terminal 14 are configured according to commonly known technical standards.

The apparatus 2 for converting a color image B into a hash value h is for example a computer or a work station. In particular, it is a work station or computer configured for postproduction of video data.

The processing unit 8 is configured to resize the image Y into the series of first resized images YH1 .. Yhn, thereby performing method step S21. Further, the processing unit 8 is configured to derive from each first resized image YH1 .. YHn a horizontal difference image dH comprising horizontal neighboring pixel differences, thereby performing method step S22.

In addition to this, the processing unit 8 is configured to resize the image Y into a series of second resized images YV1 .. Yvn, thereby performing step S31. The processing unit 8 is further configured to derive from each second resized image YV1 .. YVn a vertical difference image dV comprising vertical neighboring pixel differences, thereby performing step S32.

The combining unit 10 is configured to combine the sign bits of the horizontal neighboring pixel differences dH and the sign bits of the vertical neighboring pixel differences dV, in a predefined but otherwise arbitrary order, into the hash value h. The hash value h is provided at the output terminal 14 in a stream of hash values Sh.

In other words, the apparatus 2 is configured to perform the mentioned method of converting the image. This advantageously applies to all embodiments of the method. In the various embodiments of the apparatus 2, it is configured for performance of the method according to the various aspects of the invention.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

In the following, the alternative approach for chosing the horizontal and vertical sizes, mentioned above, will be illustrated, again with the example of n=4. Unlike before, we choose now sizes of the first resized images of 2x16, 4x8, 8x4, and 16x2. The horizontal difference images derived therefrom will be 2x15, 4x7, 8x3, and 16x1 pixels, equivalent to a total of 30, 28, 24, and 16 pixels. We choose sizes of the second resized images of 16x2, 8x4, 4x8, and 2x16. The vertical difference images derived therefrom will be 15x2, 7x4, 3x8, and 1x16 pixels, equivalent to a total of 30, 28, 24, and 16 pixels. As can easily be recognized, this allows for a simplification of the resizing steps, because they will be decimations by a factor of 2. The specific choice of parameters shown here also enables to use a same single set of resized images for deriving the horizontal difference images as well as the vertical difference images. Nevertheless the total number of differences in each difference image remains constant at least approximately. This alternative approach can be implemented for any number of levels n.

**Claims**

1. A **method** for converting an image (Y) of arbitrary size into a fixed bit length hash value (h) that allows similarity comparisons, the method comprising:

   - resizing the image (Y) into a series comprising a number n of first resized images (YH1 .. YHn) having decreasing horizontal size and increasing vertical size and
   - deriving from each first resized image (YH1 .. YHn) a horizontal difference image (dH) comprising horizontal neighboring pixel differences, wherein the horizontal size and the vertical size of the first resized images (YH1 .. YHn) are chosen such that the total number of horizontal neighboring pixel differences is constant for all horizontal difference images,
   - resizing the image (Y) into a series comprising the same number n of second resized images (YV1 .. YVn) having increasing horizontal size and decreasing vertical size and
   - deriving from each second resized image (YV1 .. YVn) a vertical difference image (dV) comprising vertical neighboring pixel differences,

   wherein the horizontal size and the vertical size of the second resized image (YV1 .. YVn) are chosen such that the total number of vertical neighboring pixel differences is constant for all vertical difference images, wherein the method further comprises the step of:
   - combining the sign bits of the horizontal neighboring pixel differences of all horizontal difference images (dH) and the sign bits of the vertical neighboring pixel differences of all vertical difference images (dV), in a predefined arbitrary order, into bits of the hash value (h).

2. The method according to claim 1, wherein the hash value (h) comprises a number of n hash elements (h1 ... hj ... hn), each of which has a horizontal component (hjH) and a vertical component (hjV).

3. The method according to claim 2, wherein the horizontal component (hjH) of a j-th hash element (hj) is a vector comprising the horizontal neighboring pixel differences derived from the j-th first resized image (YHj) and the vertical component (hjV) of the j-th hash element (hj) is a vector comprising the vertical neighboring pixel differences derived from the j-th second resized image (YVj).

4. The method according to claim 2 or 3, wherein each of the horizontal component (hjH) and the vertical component (hjV) has a bit length of m, with m being related to n by m = 4**(j-1).

5. The method according to anyone of the preceding claims, wherein a j-th of the first resized images (YH1 .. YHn) is generated by resizing the image (Y) to a size of (m/(2**(j-1))+1) × 2**(j-1) pixels and a j-th of the second resized images (YV1 .. YVn) is generated by resizing the image (Y) to a size of 2**(j-1)

$\times$ (m/(2\*\*(j-1))+1) pixels, for j between 1 and the number n.

6.  The method according to anyone of claims 1 to 5, wherein the resizing of the image (Y) into the first resized images (YH1 .. YHn) and/or the second resized images (YV1 .. YVn) is performed using an interpolation kernel, performing a bilinear, bicubic and/or Lanczos interpolation.

7.  A method for converting an image (Y) of arbitrary size into a fixed bit length hash value (h) that allows similarity comparisons, the method comprising:

    - resizing the image (Y) into a series comprising a number n of first resized images (YH1 .. YHn) having decreasing horizontal size and increasing vertical size and
    - deriving from each first resized image (YH1 .. YHn) a horizontal difference image (dH) comprising horizontal neighboring pixel differences, wherein the horizontal size and the vertical size of the first resized images (YH1 .. YHn) are chosen such that the total number of pixels of the first resized images is constant,
    - resizing the image (Y) into a series comprising the same number n of second resized images (YV1 .. YVn) having increasing horizontal size and decreasing vertical size and
    - deriving from each second resized image (YV1 .. YVn) a vertical difference image (dV) comprising vertical neighboring pixel differences,
    wherein the horizontal size and the vertical size of the second resized image (YV1 .. YVn) are chosen such that the total number of pixels of the second resized images is constant, wherein the method further comprises the step of:
    - combining the sign bits of the horizontal neighboring pixel differences of all horizontal difference images (dH) and the sign bits of the vertical neighboring pixel differences of all vertical difference images (dV), in a predefined arbitrary order, into bits of the hash value (h).

8.  An **apparatus** (2) for converting an image (Y) of arbitrary size into a fixed bit length hash value (h) that allows similarity comparisons, the apparatus (2) comprising:

    an input unit (4), configured to receive a stream (S) of image data comprising the image (Y) of arbitrary size,
    a processing unit (8) configured to,

    - resize the image (Y) into a series comprising a number n of first resized images (YH1 .. YHn) having decreasing horizontal size and increasing vertical size and
    - derive from each first resized image (YH1 .. YHn) a horizontal difference image (dH) comprising horizontal neighboring pixel differences,

    wherein the horizontal size and the vertical size of the first resized images (YH1 .. YHn) are chosen such that the total number of horizontal neighboring pixel differences is constant for all horizontal difference images (dH),

    - resize the image (Y) into a series comprising the same number n of second resized images (YV1 .. YVn) having increasing horizontal size and decreasing vertical size and
    - derive from each second resized image (YV1 .. YVn) a vertical difference image (dV) comprising vertical neighboring pixel differences,

    wherein the horizontal size and the vertical size of the second resized images (YV1 .. YVn) are chosen such that the total number of vertical neighboring pixel differences is constant for all vertical difference images (dV), wherein the apparatus further comprises:

    a combining unit (10) configured to combine the sign bits of the horizontal neighboring pixel differences of all horizontal difference images (dH) and the sign bits of the vertical neighboring pixel differences of all vertical difference images (dV), in a predefined arbitrary order, into bits of the hash value (h).

9.  The apparatus (2) according to claim 8, wherein the combining unit (10) is configured to generate a hash value (h) comprising a number of n hash elements (h1 .. h2), each having a horizontal component (hjH) and a vertical component (hvH) each of a bit length of m with m being related to n by m = 4\*\*(n-1).

10. The apparatus (2) according to claim 9, wherein the processing unit (8) is configured to generate a j-th of the first resized images (YH1 .. YHn) by resizing the image (Y) to a size of (m/(2\*\*(j-1))+1) $\times$ 2\*\*(j-1) pixels and to generate a j-th of the second resized images (YV1 .. YVn) by resizing the image (Y) to a size of 2\*\*(j-1) $\times$ (m/(2\*\*(j-1))+1) pixels, for j between 1 and the number n.

11. An **apparatus** (2) for converting an image (Y) of arbitrary size into a fixed bit length hash value (h) that allows similarity comparisons, the apparatus (2) comprising:

**EP 3 035 209 A1**

an input unit (4), configured to receive a stream (S) of image data comprising the image (Y) of arbitrary size,
a processing unit (8) configured to,

- resize the image (Y) into a series comprising a number n of first resized images (YH1 .. YHn) having decreasing horizontal size and increasing vertical size and
- derive from each first resized image (YH1 .. YHn) a horizontal difference image (dH) comprising horizontal neighboring pixel differences,

wherein the horizontal size and the vertical size of the first resized images (YH1 .. YHn) are chosen such that the total number of pixels of the first resized images is constant,

- resize the image (Y) into a series comprising the same number n of second resized images (YV1 .. YVn) having increasing horizontal size and decreasing vertical size and
- derive from each second resized image (YV1 .. YVn) a vertical difference image (dV) comprising vertical neighboring pixel differences,

wherein the horizontal size and the vertical size of the second resized images (YV1 .. YVn) are chosen such that the total number of pixels of the second resized images is constant,

wherein the apparatus further comprises:

a combining unit (10) configured to combine the sign bits of the horizontal neighboring pixel differences of all horizontal difference images (dH) and the sign bits of the vertical neighboring pixel differences of all vertical difference images (dV), in a predefined arbitrary order, into the hash value (h).

Fig. 1

Fig. 2

Europäisches
Patentamt

European
Patent Office

Office européen
des brevets

**EUROPEAN SEARCH REPORT**

Application Number

EP 14 30 7077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2010/318515 A1 (RAMANATHAN PRASHANT [US] ET AL) 16 December 2010 (2010-12-16) * paragraphs [0005], [0008] - [0011], [0076], [0077]; figure 6 * ----- | 1-11 | INV. G06F17/30 |
| A | US 2010/183189 A1 (OH WEON GEUN [KR] ET AL) 22 July 2010 (2010-07-22) * paragraphs [0007] - [0009], [0029], [0032] * ----- | 1-11 | |

TECHNICAL FIELDS
SEARCHED      (IPC)

G06F

The present search report has been drawn up for all claims

| Place of search | Date of completion of the search | Examiner |
|---|---|---|
| Berlin | 28 May 2015 | Haffner, Ronald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

        ................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 7077

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2015

| Patent document cited in search report | Publication date | Patent family member(s) | | Publication date |
|---|---|---|---|---|
| US 2010318515 A1 | 16-12-2010 | US | 2010318515 A1 | 16-12-2010 |
| | | US | 2012215789 A1 | 23-08-2012 |
| | | US | 2013179452 A1 | 11-07-2013 |
| | | US | 2014052737 A1 | 20-02-2014 |
| US 2010183189 A1 | 22-07-2010 | KR | 20090004440 A | 12-01-2009 |
| | | US | 2010183189 A1 | 22-07-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8463000 B1
- US 8229227 B2